# EUROPÄISCHE PATENTSCHRIFT

(11) **EP 2 189 341 B1**
(45) Veröffentlichungstag und Bekanntmachung des Hinweises auf die Patenterteilung: **02.01.2013**
(21) Anmeldenummer: 09176667.5
(22) Anmeldetag: 20.11.2009
(51) Int. Cl.: B60S 3/00

(54) **Trocknungsverfahren und Trockeneinrichtung für Behandlungseinrichtungen von Fahrzeugen**
Drying method and device for treatment devices of vehicles
Procédé de séchage et dispositif de séchage pour dispositifs de traitement de véhicules

(30) Priorität: 20.11.2008 DE 202008015442 U
(43) Veröffentlichungstag der Anmeldung: 26.05.2010
(73) Patentinhaber: Otto Christ AG, 87734 Benningen (DE)
(72) Erfinder: Christ, Markus, 87700 Memmingen (DE)
(74) Vertreter: Ernicke, Klaus Stefan

(56) Entgegenhaltungen:
- EP-A2- 1 147 957
- WO-A1-2005/105532
- DE-U1- 29 810 804
- DE-U1-202004 012 921

## Beschreibung

Die Erfindung betrifft ein Trocknungsverfahren und eine Trockeneinrichtung für Behandlungseinrichtungen von Fahrzeugen, insbesondere Autowaschanlagen, mit den Merkmalen im Oberbegriff des Hauptanspruchs.

Bei Autowaschanlagen ist es aus der Praxis bekannt, für die Fahrzeugtrocknung eine Trockeneinrichtung mit einer Dachdüse und ggf. mehreren Seitendüsen nebst Gebläsen vorzusehen. Diese horizontal bzw. im wesentlichen vertikal ausgerichteten Trockendüsen sind üblicherweise einteilig ausgebildet und besitzen jeweils einen Düsenkasten mit einem Gebläse. Bei Dachdüsen kommt es bisweilen vor, dass an einem Düsenkasten zwei Gebläse angeordnet sind. Die EP 0 965 505 A2 zeigt eine solche querliegende, einteilige Dachdüse mit beidseits außen angebauten Gebläsen. Trotz aller Anstrengungen der Fachwelt bieten die bekannten Trockeneinrichtungen noch kein optimales Trockenergebnis für das Fahrzeug.

Aus der EP 1 627 788 A1 ist ein weiterentwickeltes Trocknungsverfahren nebst Trockeneinrichtung für Behandlungseinrichtungen von Fahrzeugen bekannt. Die hier gezeigte Trockendüse hat einander kreuzende Düsenkästen mit jeweils einem randseitig angebauten Gebläse, wobei die Düsenkästen über die Mitte der Trockendüse und des Portals hinausreichen und auf der dem Gebläse gegenüberliegenden Seite einen Düsenschlitz für den Auslass der Trockenluft haben. Die Düsenkästen können jeweils bis zum gegenüberliegenden Rand der Trockendüse und unter das dortige Gebläse reichen. Die Düsenschlitze der beiden Düsenkästen ergänzen einander und bilden eine durchgehende Luftauslassöffnung, die sich über die gesamte Breite der Trockendüse erstrecken kann. An den vorderen Enden der Düsenkästen fällt die Strömungsgeschwindigkeit und der Druck im Düsenkasten bzw. im innenliegenden Strömungskanal ab.

Die EP 1 147 957 A2 zeigt eine Trockeneinrichtung mit zwei in einem Portal angeordneten Gebläsen, wobei sich an die Gebläse jeweils zwei getrennte Düsenkästen mit horizontaler und vertikaler Ausrichtung anschließen.

Die WO 2005/105532 A1 befasst sich mit einer Trockeneinrichtung, deren vier Gebläse eigene getrennte Düsenkästen mit jeweils einer Auslassöffnung aufweisen.

Es ist Aufgabe der vorliegenden Erfindung, eine weiter verbesserte Trockentechnik aufzuzeigen.

Die Erfindung löst diese Aufgabe mit den Merkmalen im Oberbegriff des des Hauptanspruchs.
Die Verzweigung des Strömungskanals hat verschiedene Vorteile hinsichtlich der Luftführung, der Düsengestaltung, der Gebläseanordnung und -ausbildung sowie der Raumverhältnisse.

Einerseits kann über die Breite der Trockendüse die Ausströmgeschwindigkeit der Trockenluft und der Druck in den Strömungskanälen bzw. den Kanalabschnitten besser gesteuert und aufrechterhalten werden. Insbesondere kann in den äußeren Öffnungsabschnitten der Auslassöffnungen des oder der Düsenkästen ein Seitenstrahl emittiert werden, dessen Eigenschaften durch die Gestaltung des abgezweigten Kanalabschnitts getrennt von den aus den inneren Öffnungsabschnitten austretenden Mittelstrahlen eingestellt werden kann.

Die gegeneinander abgeschotteten und in räumlich getrennten Bahnen verlaufenden Kanalabschnitte können unabhängig voneinander gestaltet und an die jeweils gewünschten oder erforderlichen Strömungsbedingungen angepasst werden. Insbesondere für den äußeren Kanalabschnitt kann trotz des langen Strömungswegs vom Gebläse bis zum gegenüber liegenden Düsenkastenende und der dortigen Austrittsöffnung der Strömungs- und Druckverlust gering gehalten werden.

Der Seitenstrahl kann gezielt auf die Seitenfläche des Fahrzeugs gerichtet werden und dabei eine gewünschte Neigung oder Richtung erhalten. Der Seitenstrahl kann ferner eine hohe Strahlstärke bzw. Strömungsgeschwindigkeit haben. Hierfür kann eine frühzeitige Abzweigung hinter dem Gebläse und eine angepasste Gestaltung des Kanalabschnitts günstig sein.

Die Breite der Trockendüse kann optimal ausgenutzt und dabei klein gehalten werden, was trotz außenseitig angebauter Gebläse möglich ist. Die komplette Trockendüse kann innerhalb einer Portalöffnung untergebracht werden. Die Länge der gesamten Luftaustrittsöffnung der Trockendüse kann maximiert werden und kann bis zu den Rändern der Trockendüse reichen. Die Gebläse müssen nicht mehr wie bei der EP 0 965 505 A2 außenseitig an die Luftaustrittsöffnung anschließen und dadurch die Breite der Trockendüse unnötig vergrößern.

Der abgezweigte bzw. äußere Kanalabschnitt kann um ein anderes Gebläse herum gelenkt werden, was insbesondere außenseitig geschehen kann. Dieser Kanalabschnitt kann bis zu einer evtl. Verengung kurz vor dem Öffnungsabschnitt eine im wesentlichen rechteckige Kastenform mit optimalen Strömungsbedingungen für die Trockenluftströmung behalten.

Der Seitenstrahl kann getrennt vom Mittelstrahl auf das Fahrzeug gerichtet werden. Insbesondere kann er auf die Seitenfläche des Fahrzeugs gerichtet werden, was mit einer schrägen oder geraden Ausrichtung erfolgen kann. Hierdurch werden optimale Trocknungsergebnisse durch die Mittel- und Seitenstrahlen erzielt.

Der abgezweigte Kanalabschnitt mit seiner Umlenkung kann seitlich an das Gebläsegehäuse und einen evtl. dortigen Spiralabschnitt sowie an einen ersten gemeinsamen Kanalabschnitt des anderen Düsenkastens angebaut sein.

Hierdurch erhält die Trockendüse eine kompakte Bauform und hat trotz verbesserter Strömungsbedingungen die gleiche kleine Baugröße wie die vorbekannte Trockendüse aus der EP 1 627 788 A1. Die beanspruchte Trockendüse kann Baumerkmale dieser vorbekannten Trockendüse aus der EP 1 627 788 A1 übernehmen. Sie kann aber auch in anderer Weise gestaltet sein.

Eine mehrteilige Ausbildung der Trockendüse mit sich kreuzenden Düsenkästen ist günstig für die Trocknungswirkung am Fahrzeug. Hierdurch und über die vergrößerte Düsenkastenlänge lassen sich die Trockenluftströme besser führen und ausrichten.

Aus den verschiedenen Düsenkästen können Trockenluftströme mit unterschiedlichen Austrittsrichtungen auf das Fahrzeug gelenkt werden. Bei einer Dachdüse hat dies den Vorteil, dass das Wasser auf den oberen oder horizontalen Fahrzeugflächen, wie Motorhaube, Dach, Kofferraumdeckel, Front- und Heckscheibe etc. mit schräg auftreffenden Luftstrahlen von der Mitte aus nach links und rechts abgeschoben werden kann. Das Wasser wird insgesamt besser und rückstandsfrei entfernt. Wasserschleppen werden weitgehend vermieden. Hierbei ist es insbesondere günstig, dass durch die Düsengestaltung der austretende Trockenluftstrom schräg zur Fahrzeuglängsachse oder Fahrtrichtung ausgerichtet werden kann, so dass durch diese Schräglage eine weitere, das Wasser noch besser abtreibende Richtungskomponente hinzukommt.

Die beanspruchte Trockeneinrichtung baut trotz verzweigter Strömungskanäle und einander kreuzender Düsenkästen sehr schmal und leicht. Sie lässt sich auch unter beengten Platzverhältnissen in einem Waschportal unterbringen. Trotz mehrerer Düsenkästen ist die Trockendüse nicht wesentlich breiter als ein einzelner Düsenkasten mit Gebläse. Hierfür ist die abgewinkelte und mehrachsig verjüngte Düsenkastenform sowie die gegenseitig angeschmiegte Anordnung der Düsenkästen von Vorteil. Die Gebläse können platzsparend weiter innen an der Trockendüse angeordnet werden, wobei deren Breite optimal für die Trockenluftströmung und deren Auslass zum Fahrzeug genutzt werden kann.

Mit der beanspruchten Gestaltung lässt sich zudem eine maximale Länge der Luftaustrittsöffnung unter Aufrechterhaltung optimaler Strömungsbedingungen der Trockenluft erreichen, wobei die Öffnungslänge größer als bei konventionellen Trockendüsen ist. Die lange Luftaustrittsöffnung wird durch das Zusammenwirken der einzelnen Düsenschlitze geschaffen.

Die Düsenkästen können unterschiedlich ausgebildet sein. Sie können getrennt voneinander angeordnet sein oder gemeinsame Kastenabschnitte aufweisen. Bei der einen Variante, die ähnlich der EP 1 627 788 A1 gestaltet ist, können die vorderen Enden der über die Fahrzeugmitte reichenden und sich ggf. kreuzenden Düsenkästen unter das etwas höher angesetzte Gebläse des anderen Düsenkastens reichen und so die Länge der Düsenschlitze maximieren. Bei der anderen Variante kreuzen sich die abgezweigten äußeren Kanalabschnitte, wobei die anderen Kanalabschnitte ggf. einen gemeinsamen Kastenbereich haben können.

Günstig ist außerdem der Überlappungsbereich der Düsenschlitze, der bei einer Dachdüse z.B. in der Düsen- bzw. Anlagenmitte und üblicherweise auch in der Fahrzeugmitte angeordnet ist. Dieser Überlappungsbereich wirkt sich besonders günstig auf das Abtreiben des Wassers aus.

Die gekreuzten Düsenkästen und die weit auseinander liegende Anordnung von Gebläse und Düsenschlitz bietet zudem den Vorteil einer günstigen Strömungsführung der Trockenluft in den Düsenkästen und den dort gebildeten langen Strömungskanälen. Die Trocknungsluft lässt sich besser und sicherer in ihrer Strömungsrichtung innerhalb des Strömungskanals und beim Austritt aus dem Düsenschlitz am Kanalende lenken. Strömungsverluste werden weitgehend vermieden. Die Gebläseleistung kann besser ausgenutzt werden. Im Vergleich mit konventionellen Trockeneinrichtungen können kleinere und leisere Gebläse eingesetzt werden.

Günstig ist ferner der Einsatz von schmal bauenden Radialgebläsen an den Düsenkästen, wobei diese Gebläseart besonders gute Strömungsergebnisse bietet, insbesondere in Verbindung mit einem Spiralbereich des Düsenkastens am Gebläseumfang.

Die beanspruchte Trockendüse eignet sich besonders für den Einsatz als im wesentlichen horizontale Dachdüse. Die günstigen Eigenschaften werden zusätzlich durch eine nach der Fahrzeughöhenkontur gesteuerte Hebe- und Senkbewegung der Dachdüse mittels einer Hubführung in einem Portal oder einem Ständer unterstützt. Die Dachdüse lässt sich sowohl in Portalwaschanlagen, wie auch in Trockenstationen von Autowaschstraßen, Taktanlagen oder dergleichen einsetzen. Die Trockendüse eignet sich ansonsten auch für beliebige andere Einsatzbereiche, insbesondere bei entsprechender Anpassung auch als Seitendüse.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Stirnansicht eines Portals einer Autowaschanlage mit einer Trockeneinrichtung und einer mehrteiligen Trockendüse mit verzeigten Strömungskanälen,
- Figur 2:: eine perspektivische Rückansicht der Trockendüse von Figur 1,
- Figur 3:: eine perspektivische Ansicht der Trockendüse von Figur 1 und 2 schräg von unten mit Darstellung der Luftströme,
- Figur 4:: eine Unteransicht der Trockendüse,
- Figur 5:: eine vergrößerte Frontansicht der Trockendüse von Figur 1,
- Figur 6:: eine geklappte Draufsicht der Trockendüse von Figur 5 gemäß Pfeil VI,
- Figur 7:: eine vergrößerte Rückansicht der Trockendüse von Figur 1,
- Figur 8:: eine geklappte Seitenansicht der Trockendüse von Figur 5 gemäß Pfeil VIII,
- Figur 9:: eine Variante einer mehrteiligen Trockendüse mit verzeigten Strömungskanälen in perspektivischer Ansicht,
- Figur 10:: eine andere perspektivische Ansicht der Trockendüse von Fig. 9
- Figur 11:: eine Frontansicht der Trockendüse von Fig. 9,
- Figur 12:: eine Draufsicht der Trockendüse von Fig. 9,
- Figur 13:: eine Unteransicht der Trockendüse von Fig. 9 und

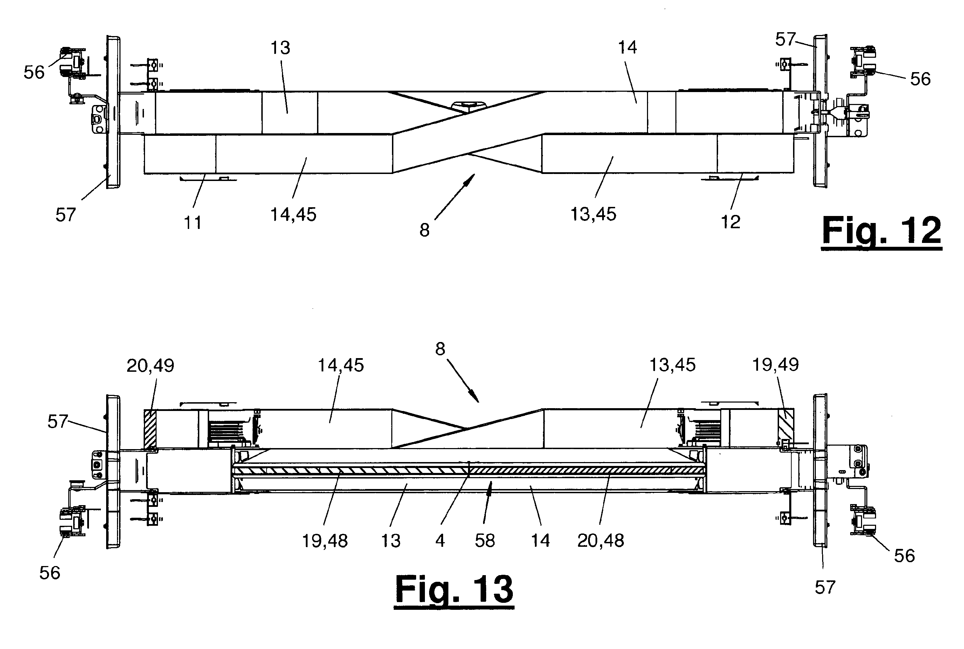

- Figur 13:: eine weitere Variante der Trockendüse in Frontansicht.

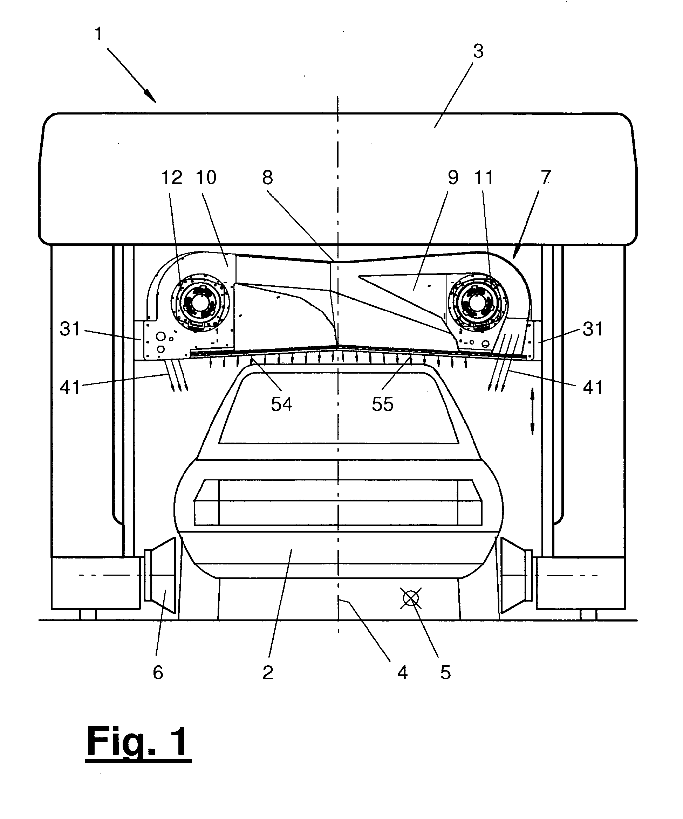

Figur 1 zeigt in einer Front- oder Stirnansicht und in schematischer Darstellung eine Behandlungseinrichtung (1) für Fahrzeuge (2), die in diesem Fall als Autowaschanlage, insbesondere als Portalwaschanlage, ausgebildet ist. Alternativ kann es sich um eine Autowaschstraße, eine Taktanlage oder eine andere beliebige Ausführungsform einer Autowaschanlage handeln. Die Behandlungseinrichtung (1) hat in den verschiedenen Varianten jeweils eine vorgegebene Fahrtrichtung (5) für die Fahrzeuge (2) und/oder für ihre Einrichtungskomponenten. In weiterer Abwandlung kann die Behandlungseinrichtung (1) auch als Polieranlage oder dergleichen ausgebildet sein.

Die Portalwaschanlage (1) besitzt mindestens ein gegenüber dem z.B. stehenden Fahrzeug (2) in Fahrtrichtung (5) verfahrbares Gestell (3), das eine beliebige Formgebung haben kann und vorzugsweise als U-förmiges Portal ausgebildet ist. Im Gestell oder Portal (3) sind verschiedene Behandlungsaggregate angeordnet. Dies ist zum einen eine beliebig ausgebildete Wascheinrichtung (6), von der z.B. der Übersicht halber nur Radwaschbürsten dargestellt sind. Alternativ oder zusätzlich kann die Wascheinrichtung (6) Dach- und Seitenbürsten, Hochdruck-Wascheinrichtungen und/oder sonstige Waschaggregate aufweisen. Hinzu kommen ggf. Auftragsvorrichtungen für Wasser, Reinigungsmittel, Trocknungsmittel, Konservierungsmittel und dergleichen.

Alternativ kann das Portal (3) stehen und das Fahrzeug (2) durch das Portal (3) in Fahrtrichtung (5) geschleppt werden. In einer weiteren Abwandlung können Portal (3) und Fahrzeug (2) mobil sein und in Fahrtrichtung (5) relativ zueinander bewegt werden.

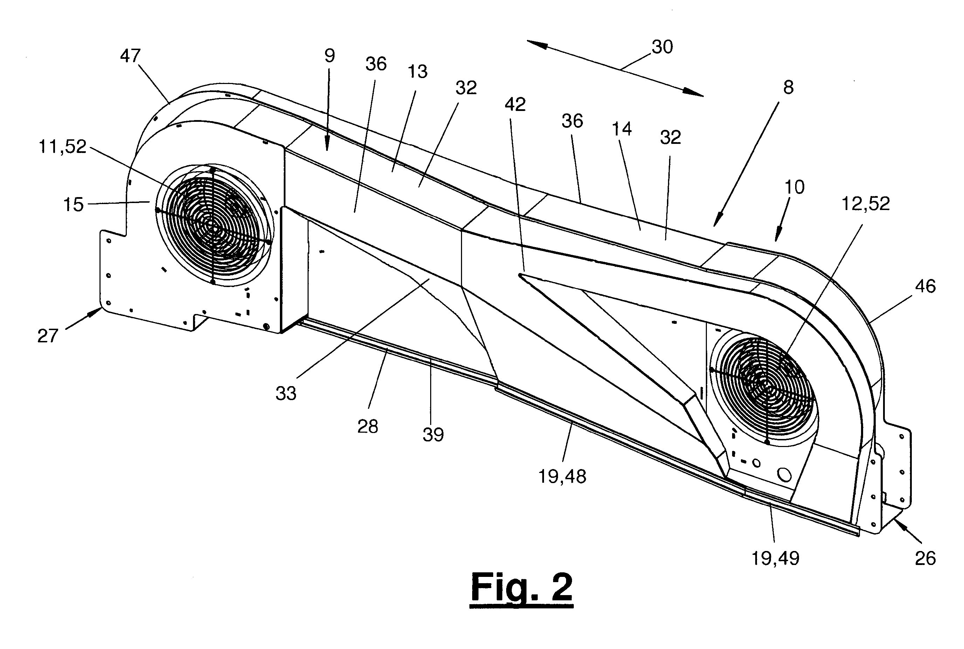

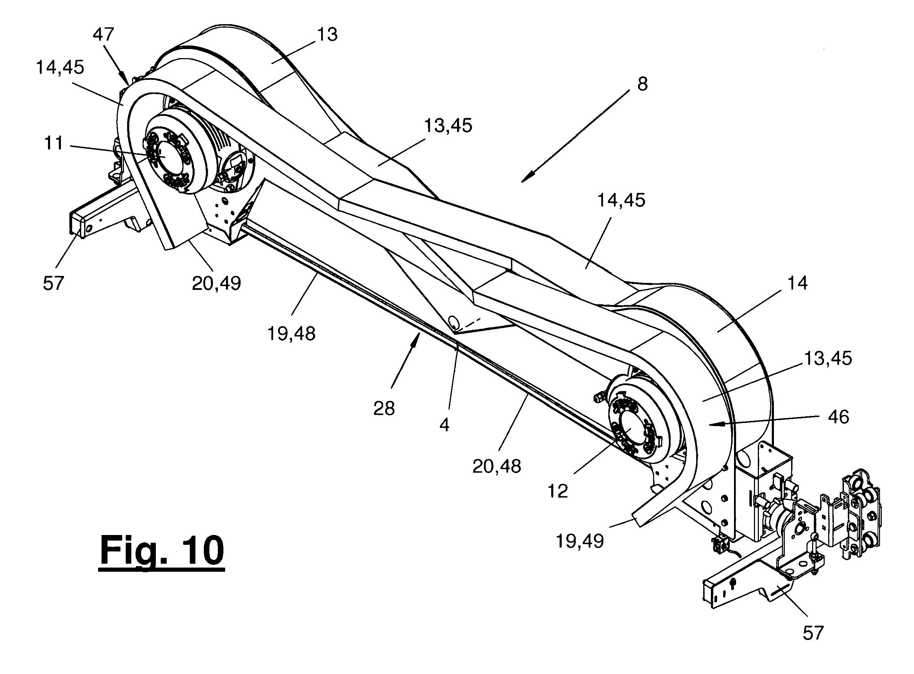

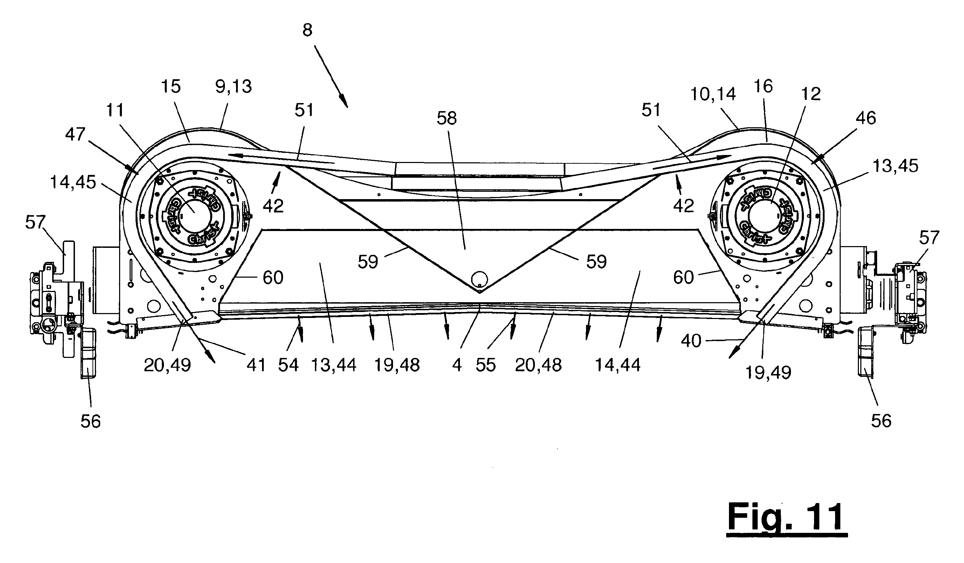

Die Behandlungseinrichtung (1) besitzt ferner eine Trockeneinrichtung (7), die mindestens eine Trockendüse (8) aufweist. Die Trockendüse (8) kann mindestens ein angebautes bzw. mitgeführtes Gebläse (11,12) aufweisen. Vorzugsweise sind zwei Gebläse (11,12) vorgesehen. Deren Zahl kann auch größer sein. Die Gebläse (11,12) können an den Seitenrandbereichen der Trockendüse (8) und gegenüberliegend angeordnet sein. In der gezeigten Ausführungsform ist die Trockendüse (8) eine im wesentlichen horizontal ausgerichtete und oberhalb des Fahrzeugs (2) angeordnete Dachdüse, die quer zur Fahrtrichtung (5) der Fahrzeugs (2) und/oder des Portals (3) ausgerichtet ist. Figur 2 bis 8 und Figur 9 bis 13 zeigen verschiedene Ausführungsformen einer solchen Dach-Trockendüse (8).

Die Trockendüse (8), insbesondere Dachdüse, kann mittels einer angetriebenen und steuer- oder regelbaren, geführten Hubeinrichtung (31) an den Portalständern, z.B. einer vertikalen oder schrägen Schienenführung, gegenüber dem Fahrzeug (2) auf- und abbewegt werden und kann dadurch in Verfolgung der Höhenkontur des Fahrzeugs auf einen optimalen Abstand gegenüber der beaufschlagten Fahrzeugoberfläche eingestellt und nachgeführt werden.

Die Fahrzeugkontur kann in der Höhe und/oder in der Breite berührungslos mittels einer mitgeführten Erfassungseinrichtung (56), z.B. einer optischen Sensor- oder Kameraanordnung, einer Ultraschall-Sensorik oder dgl. aufgenommen und gespeichert werden. Eine Konturenerfassung kann auch an anderer Stelle erfolgen, wobei die Konturen- oder Steuerdaten an den Antrieb der Hubführung (31) gemeldet werden. Die Dachdüse (8) kann außerdem an der Hubeinrichtung (31) um ihre Längsachse schwenkbar angeordnet sein. Auf die Hubeinrichtung (31) und die Schwenkanordnung kann alternativ verzichtet werden.

Die Trockendüse (8) kann einteilig oder mehrteilig ausgebildet sein und z.B. eine oder zwei Düseneinheiten (9,10) besitzen. Es können auch mehr Düseneinheiten vorhanden sein. Die Düseneinheiten (9,10) können ihrerseits miteinander zu einer kompakten Baueinheit verbunden sein.

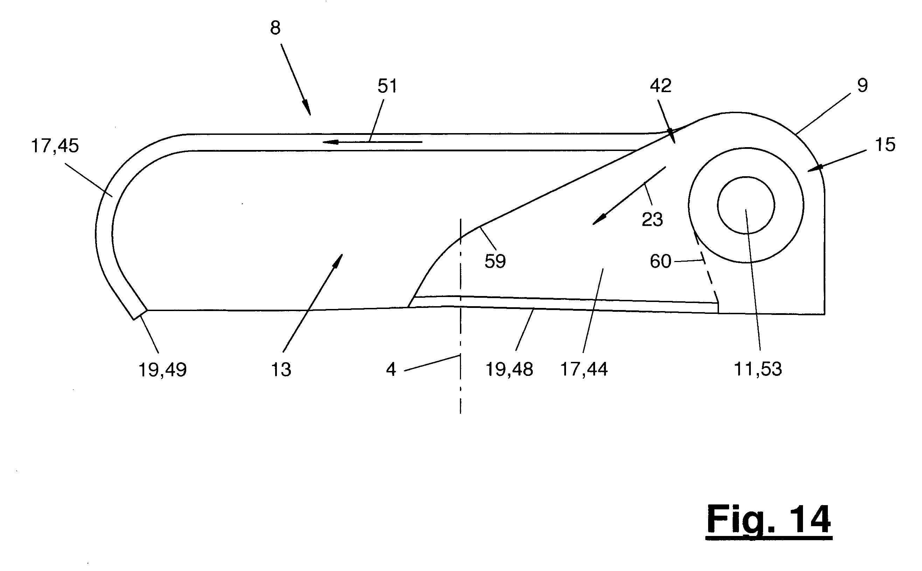

Nachfolgend wird unter Bezugnahme auf Figur 1 bis 13 eine mehrteilige Trockendüse (8) mit zwei Düseneinheiten (9,10) und in der Ausführung als Dachdüse beschrieben. Die Merkmale gelten mit entsprechender Anpassung auch für die am Ende zu Figur 14 beschriebene Variante einer einteiligen Trockendüse (8) und für die nicht gezeigte Abwandlung mit mehr als zwei Düseneinheiten (9,10) sowie eine Anordnung als Seitendüse oder dgl..

Die Düseneinheiten (9,10) bestehen jeweils aus einem Düsenkasten (13,14) und mindestens einem zugehörigen Gebläse (11,12). Die Gebläse (11,12) sind z.B. an ihren Düsenkästen (13,14) endseitig angeschlossen, vorzugsweise am Kastenende angebaut, und können bei den Hub- und ggf. Schwenkbewegungen der Trockendüse (8) mitbewegt werden. Alternativ können die Gebläse (11,12) an anderer Stelle, z.B. stationär im Portal (3) angeordnet und mit ihrem Düsenkasten (13,14) vorzugsweise endseitig durch eine flexible oder verstellbare Leitung verbunden bzw. angeschlossen sein.

Die Düsenkästen (13,14) sind mit ihrer Längserstreckung (30) im wesentlichen quer zur Fahrtrichtung (5) bzw. längs der Portal-Hauptebene ausgerichtet. Dies schließt eine schräge Kastenanordnung ein. Die Düsenkästen (13,14) leiten die Trockenluft vom Gebläse (11,12) durch einen innen liegenden bzw. internen Strömungskanal (17,18) zu einer am Kanalende angeordneten Austrittsöffnung (19,20), an der die Luftströmung (22,23) zum Fahrzeug (2) hin austritt. Die Austrittsöffnung (19,20) ist vorzugsweise schlitzförmig ausgebildet und ist schmäler als der Strömungskanal (17,18), der sich zur Austrittsöffnung (19,20) hin entsprechend verjüngt.

Die Austrittsöffnung (19,20) ist hauptsächlich in der Längserstreckung (30) des Düsenkastens (13,14) ausgerichtet. Die Austrittsöffnung (19,20) ist auch im wesentlichen quer zur Fahrtrichtung (5) bzw. längs der Portal-Hauptebene ausgerichtet. Von dem am seitlichen oder stirnseitigen Ende des Düsenkastens (13,14) angeschlossenen oder angebauten Gebläse (11,12) strömt die Luft im wesentlichen quer zur Fahrtrichtung (5) bzw. längs der Portal-Hauptebene in und durch den Düsenkasten (13,14).

Der Strömungskanal (17,18) weist im Innenraum des Düsenkastens (13,14) eine Verzweigung (42) in mindestens zwei getrennte Kanalabschnitte (44,45) auf. Es können auch drei oder mehr Kanalabschnitte (44,45) sein. Die Kanalabschnitte (44,45) sind gegenseitig abgeschottet und verlaufen mit räumlicher Distanz zueinander. Die Kanalabschnitte (44,45) haben auch unterschiedliche Formen in Querschnitt und Längserstreckung. Sie haben ferner eigene, separate Wandungen, die umfangseitig geschlossen sind.

Die Verzweigung (42) ist zwischen dem Gebläse (11,12) und der Auslassöffnung (19,20) des Düsenkastens (13,14) angeordnet. Der eine äußere Kanalabschnitt (45) reicht bis zu der dem eigenen Gebläse (11,12) gegenüber liegenden Seite des Düsenkastens (13,14) und der Trockendüse (8). Aus dem äußere Kanalabschnitt (45) tritt ein vertikaler oder schräger Seitenstrahl (40,41) zum Fahrzeug (2), insbesondere zu dessen Seitenfläche aus.

Der äußere Kanalabschnitt (45) erstreckt sich zu einem anderen Gebläse (12) hin. Das Gebläse (12) kann zum eigenen oder zu einem anderen Düsenkasten gehören. Der äußere Kanalabschnitt (45) kann bis in die Nähe des anderen Gebläse (12,11) geführt werden und dort nach außen münden.

Der äußere Kanalabschnitt (45) kann dabei um ein anderes Gebläse (12,11) eines ggf. anderen Düsenkastens (14,13) herumgeführt sein. Er verläuft z.B. oberhalb und an der Außenseite des anderen Gebläses (12,11) und umgibt dieses mit einer Umlenkung (46,47) von ca. 90° oder mehr. Der andere innere Kanalabschnitt (44) kann vor diesem anderen Gebläse (12,11) enden. Er kann ggf. auch ein Stück bis unter dieses andere Gebläse (12,11) reichen. Hierfür zeigen Figur 2 bis 8 und Figur 9 bis 13 unterschiedliche Ausführungsformen.

Die Düsenkästen (13,14) können strömungstechnisch getrennt und gegeneinander abgeschottet sein, so dass kein gegenseitiger Luftübertritt erfolgt. Die ggf. abgewinkelten Düsenkästen (13,14) können sich aneinander anschmiegen und ggf. auch einander kreuzen. Die Düsenkästen (13,14) sind quer zur Längsachse (30) der Trockendüse (8) bzw. in Fahrtrichtung oder Querrichtung (5) hintereinander angeordnet. Die Düsenkästen (13,14) sind hierbei vorzugsweise eng aneinander gebaut und sind mit ihren Gebläsen (11,12) miteinander zu einer kompakten Baueinheit der Trockendüse (8) verbunden.

Die Düsenkästen (13,14) reichen mit ihren aneinander anschließenden Austrittsöffnungen (19,20) vorzugsweise im wesentlichen über die gesamte Breite der Trockendüse (8) sowie der Portalöffnung und enden kurz vor der Führung (31). Sie können sich über die Dachbreite und die gesamte Maximal-Breite der Fahrzeuge (2) erstrecken, so dass die ausströmende Trockenluft das gesamte Fahrzeugdach erfasst und außerdem beidseits in ggf. separaten vertikalen oder schrägen Seitenstrahlen (40,41) auf die Seitenflächen des Fahrzeugs (2) gerichtet ist. Die Gebläse (11,12) befinden sich vorzugsweise ebenfalls innerhalb der Gestell- oder Portalöffnung.

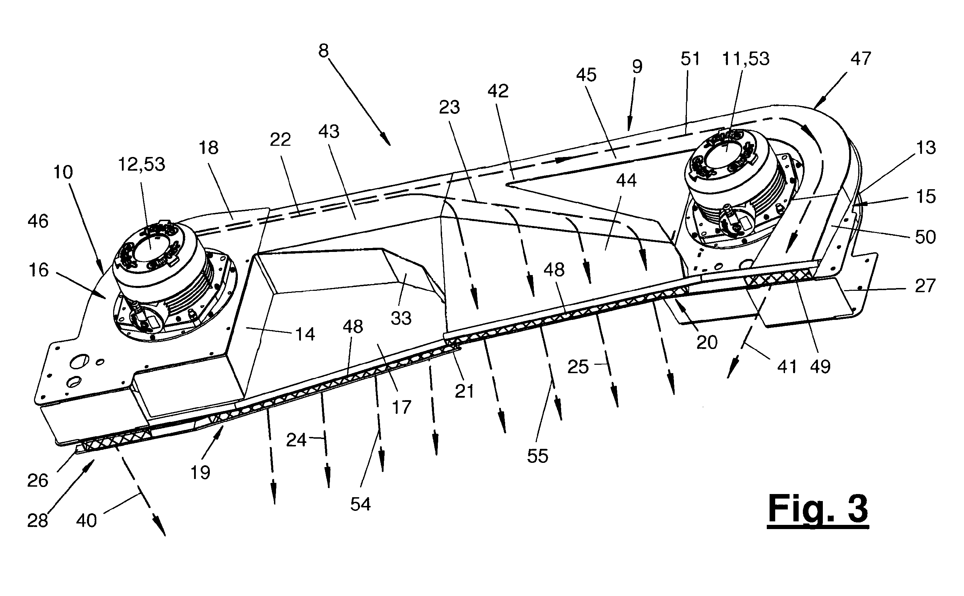

Die Düsenkästen (13,14) haben einen langen Strömungskanal (17,18), der von den jeweils außenseitig angeordneten Gebläsen (11,12) ausgeht. In der nachfolgend beschriebenen Variante von Figur 2 bis 8 reicht der Strömungskanal (17,18) jeweils über die Mitte (4) der Trockendüse (8) hinweg und mündet endseitig an der nach unten offenen Austrittsöffnung (19,20). Die Mitte (4) der Trockendüse (8) kann zugleich die Mitte des Portals (3) bzw. des Fahrzeugs (2) sein. Die Austrittsöffnungen (19,20) sind mit erheblicher Distanz zu ihrem zugehörigen Gebläse (11,12) angeordnet und liegen ihrem Gebläse (11,12) jenseits der Mitte (4) gegenüber. Figur 1 und 3 zeigen dies an einer kompletten Trockendüse (8). Durch diese Gestaltung wird die Trockenluft jeweils am einen Rand der Trockendüse (8) angesaugt und im geschlossenen Strömungskanal (17,18) über die Mitte (4) bzw. die eine Fahrzeughälfte hinweg bis zur Austrittsöffnung (19,20) auf der anderen Seite geblasen und dort auf das Fahrzeug (2) gerichtet.

Die Gebläse (11,12) saugen außenseitig Luft, insbesondere Umgebungsluft, an und blasen sie in den jeweils angeschlossenen Düsenkasten (13,14). Die Gebläse (11,12) können in beliebiger Weise konstruktiv ausgebildet sein. Es handelt sich vorzugsweise um Radialgebläse, welche die Umgebungsluft axial durch eine Öffnung (52) ansaugen und an ihrem Umfang radial ausblasen. Sie besitzen jeweils einen Motor (53), z.B. einen Elektromotor, und ein Lüfterrad oder ein anderes geeignetes Bewegungsorgan für die Trockenluft. Die Motoren (53) sind z.B. längs der Fahrtrichtung (5) ausgerichtet und können sich an der gleichen Seite der Trockendüse (8) befinden, z.B. der Frontseite. Die Ansaugöffnungen (52) befinden sich axial gegenüberliegend an der Düsenrückseite. Die Motoren (53) können auch an gegenüberliegenden Düsenseite angeordnet sein und/oder eine andere Ausrichtung haben. In den Zeichnungen sind von den Gebläsen (11,12) der Übersicht halber nur die Motoren sowie die Ansaugöffnungen dargestellt, wobei die weiteren konstruktiven Details nicht gezeigt sind. Lediglich die Gebläsedrehachsen sind mit strichpunktierten Linien angedeutet.

Umfangseitig können die Gebläse (11,12) jeweils von einem sich nach außen und oben erweiternden Spiralbereich (15,16) bzw. Spiralblech des Düsenkastens (13,14) umgeben sein, der nicht im einzelnen dargestellt ist. Am oberen Ende des Spiralbereichs (15,16) ist der jeweilige Strömungskanal (17,18) angeschlossen.

Die Strömungskanäle (17,18) und die Austrittsöffnungen (19,20) sind jeweils in mehrere Abschnitte (43,44,45) und (48,49) unterteilt. Figur 3 verdeutlicht diese Anordnung, wobei beim vorderen Düsenkasten (14), der vom linken Gebläse (12) ausgeht, die ebenfalls in Abschnitte unterteilte Luftströmung (23) mit Pfeilen gekennzeichnet ist. Der andere hinten liegende Düsenkasten (13) mit dem zugehörigen rechten Gebläse (11) hat eine entsprechende, seitenverkehrte oder gespiegelte Ausbildung. Die nachfolgenden Erläuterungen zum einen Düsenkasten (14) gelten daher für den anderen Düsenkasten (13) entsprechend.

Der Düsenkasten (14) schließt mündungseitig an den Gebläseauslass bzw. den Auslass des Spiralbereichs (16) oberhalb des Gebläses (12) an. Hier wird am Strömungskanal (18) ein erster anfänglicher Kanalabschnitt (43) gebildet. Dieser erstreckt vom Mündungsabschnitt aus nach rechts bis etwa zur Mitte (4) und teilt sich dort an der Verzweigung (42) in mindestens zwei Kanalbereiche (44,45) auf. Der eine innere Kanalabschnitt (44) erstreckt sich abwärts und endet an einem inneren Öffnungsabschnitt (48) der Auslassöffnung (20), der ca. von der Mitte (4) bis zu einem Bereich vor oder unterhalb des rechten Gebläses (11) bzw. Motors (53) reicht. Hier tritt der Mittelstrahl (55) der Trockenluft aus.

Der andere äußere Kanalabschnitt (45) verläuft im oberen Kastenbereich im wesentlichen horizontal oder mit leichter Schräglage nach oben zur gegenüberliegenden Seite der Trockendüse (8) und ist in der Umlenkung (47) oben und seitlich um den Motor (53) des rechten Gebläses (11) herumgeführt. Die Umlenkung (47) umschließt das Gebläse (11) mit einem Winkel von ca. 90° oder mehr und liegt vor bzw. auf dessen Spiralbereich (12). Sie erstreckt sich anschließend nach unten zum außenliegenden Öffnungsabschnitt (49) der Auslassöffnung (20). Dieser befindet sich am Außenrand der Trockendüse (8) und ist gemäß Figur 1 bei den üblichen Fahrzeugbreiten von z.B. PKW's jenseits des Fahrzeugdachs angeordnet.

Die abgezweigte Luftströmung (51) im Kanalabschnitt (45) wird in einem Bogen geführt und kann hierdurch als austretender Seitenstrahl (41) einen einwärts zur benachbarten Seitenfläche des Fahrzeugs (2) gerichten Drall oder eine schräge Strömungsrichtung erhalten. Die Schrägausrichtung kann auch durch eine einwärts geneigte Außenwand (50) am Ende des Kanalabschnitts (45) bewirkt oder unterstützt werden. Figur 1 zeigt diese Schrägausrichtung des Seitenstrahls (41).

Alternativ kann der Seitenstrahl (41) eine andere und z.B. vertikale Austrittsrichtung haben. Ferner kann in einer abgewandelten Ausführung die Verzweigung (42) sich an der Mündung des Gebläseauslasses bzw. des Auslasses des Spiralbereichs (16) befinden, wobei die inneren und äußeren Kanalabschnitte (44,45) hier münden und im Anfangsbereich (43) parallel und getrennt verlaufen.

Der andere Düsenkasten (13) hat eine entsprechende und seitenverkehrte Gestalt mit der Verzweigung (42) und den Kanalabschnitten (43,44,45), wobei an der Auslassöffnung (19) ein Mittelstrahl (54) und ein Seitenstrahl (40) austreten.

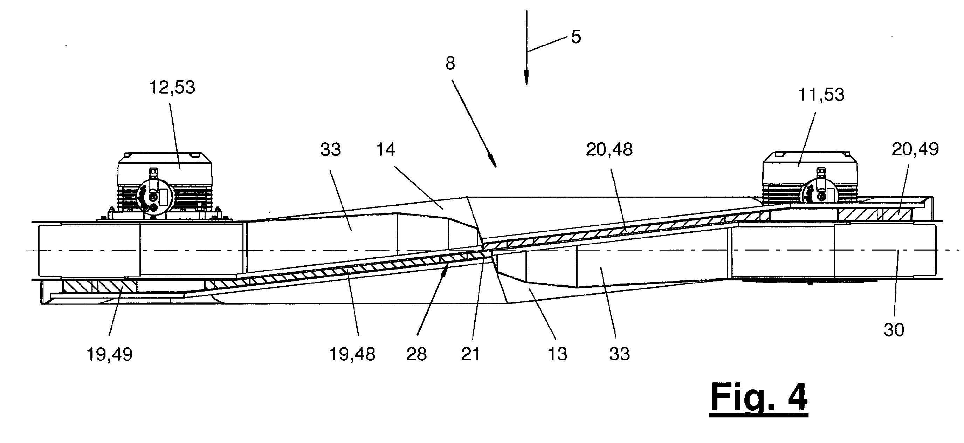

Die Öffnungsabschnitte (48,49) sind z.B. schlitzförmig ausgebildet und können im wesentlichen die gleiche Breite bzw. Schlitzweite aufweisen. Die äußeren Öffnungsabschnitte (49) können auch breiter sein. Die Öffnungsabschnitte (48,49) schließen aneinander in Längsrichtung an, was direkt angrenzend oder mit dem gezeigten kleinen Abstand geschehen kann. Sie können getrennt und voneinander abgeschottet am unteren Rand der Trockendüse (8) angeordnet sein. Alternativ können sie, ggf. mit einer Trennwand, aneinander stoßen. Sie können auch ineinander übergehen. Aus dem außenliegenden Öffnungsabschnitt (49) tritt der Seitenstrahl (41) aus. Figur 3 und 4 verdeutlichen die Öffnungsabschnitte (48,49) durch eine Kreuzschraffur.

Die Strömungsgeschwindigkeiten in den inneren und äußeren Kanalabschnitten (44,45) können im wesentlichen gleich sein, wobei der Seitenstrahl (40,41) eine gleiche oder ggf. geringere Stärke als der Mittelstrahl (54,55) hat. Alternativ kann der Seitenstrahl (40,41) stärker als der Mittelstrahl (54,55) sein.

Die Austrittsöffnungen (19,20) haben eine begrenzte Länge und bilden z.B. mit ihren inneren Öffnungsabschnitten (48) um die Mitte (4) herum in enger seitlicher Nachbarschaft eine Überlappung (21). Die Öffnungsabschnitte (48) reichen dabei mit ihrem rückwärtigen Ende ein kleines Stück über die Mitte (4) hinaus. Insgesamt haben die Austrittsöffnungen (19,20) jeweils eine Länge von etwa der Hälfte oder etwas mehr der Trockendüsenbreite. Figur 3 und 4 verdeutlicht diese Anordnung mit Blick auf die Düsenunterseite.

Die Austrittsöffnungen (19,20) können einen abgewinkelten Längsverlauf besitzen, der aus Figur 3 und 4 ersichtlich ist. Hierbei haben die inneren Öffnungsabschnitte (48) im Bereich um die Mitte (4) herum und etwa bis zu der Vorderkante der Gebläse (11,12) eine schräg zur Längsachse (30) der Trockendüse (8) bzw. schräg zur Fahrt- oder Querrichtung (5) ausgerichtete Lage. Die Öffnungsabschnitte (48) verlaufen hierbei parallel und entlang einer nachfolgend erläuterten Mittelwand (34).

Im Bereich ihrer vorderen Enden (26,27) sind die Austrittsöffnungen (19,20) bzw. die äußeren Öffnungsabschnitte (49) nach einer Knickstelle wieder längs der Achse (30) der Trockendüse (8) ausgerichtet und liegen hierbei in Parallellage auf gegenüber liegenden Seiten der Trockendüse (8). Die Austrittsöffnungen (19,20) bilden gemeinsam eine Luftausströmöffnung (28), die über die gesamte Breite der Trockendüse (8) reicht. Die Luftausströmöffnung (28) besitzt zwei Knickstellen und zeigt in der Unteransicht einen schrägen S-förmigen Verlaufen mit der besagten Überlappungsstelle (21) an der Mitte (4).

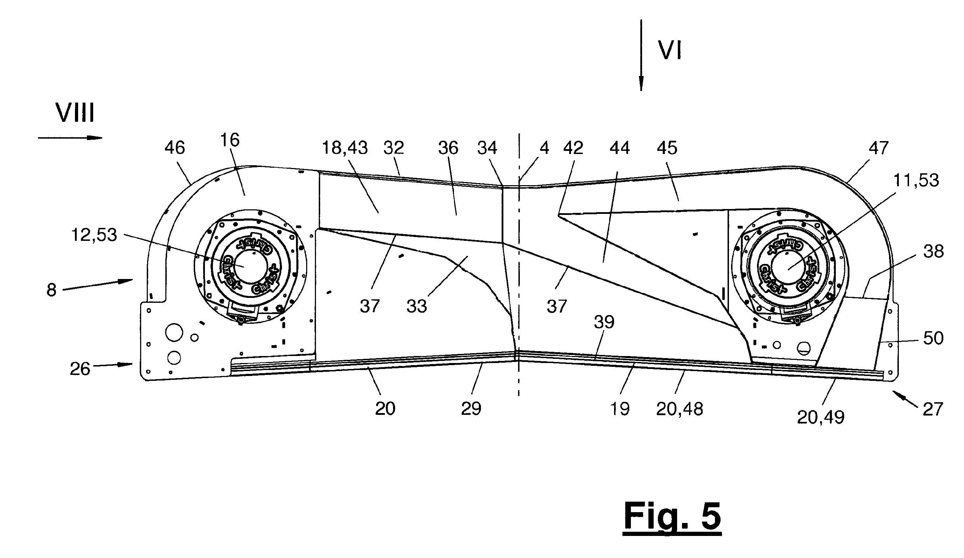

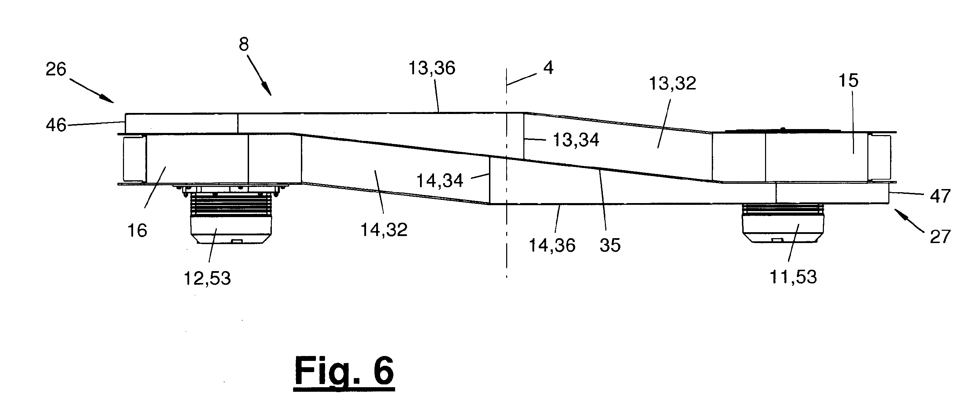

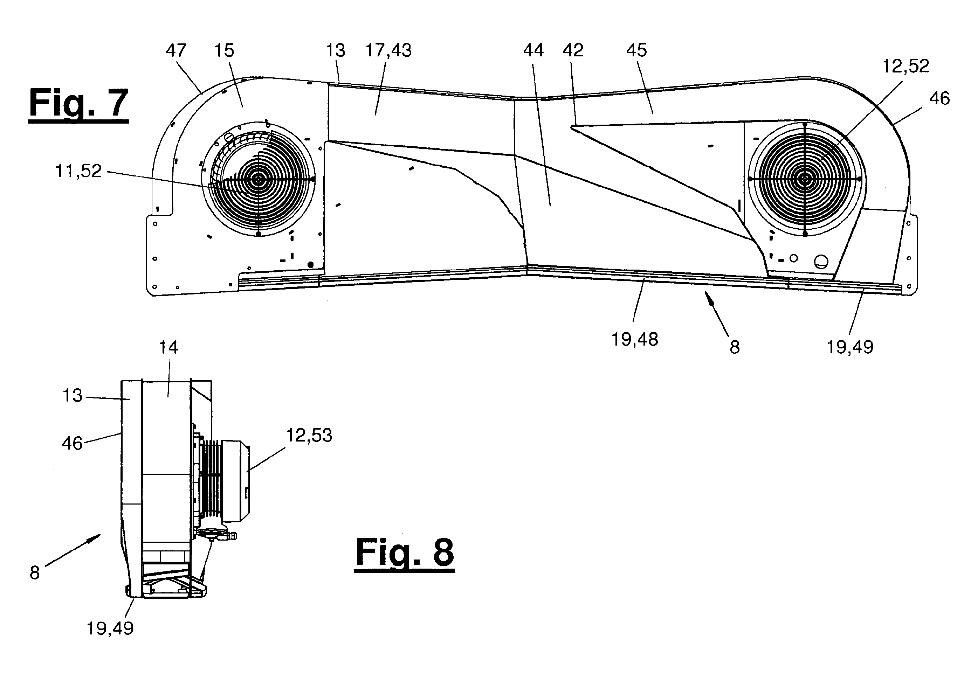

Wie Figur 5 und 7 in Stirnansichten und Figur 6 in der Draufsicht verdeutlichen, sind die Düsenkästen (13,14) im wesentlichen gleich ausgebildet und gegeneinander gerichtet bzw. gegenläufig angeordnet. Sie haben eine mehrachsig sich verjüngende strömungsgünstige Form, die auch der Baugröße zu Gute kommt. Durch die Gegenläufigkeit und die Verjüngungen schmiegen sie sich in Querrichtung (5) eng aneinander an. Hierbei können sie zumindest bereichsweise eine gemeinsame schräg zur Längsachse (30) und parallel zu den Düsenschlitzen (19,20) verlaufende Innenwand (35) haben oder mit eigenen Innenwänden in diesem Bereich plan aneinander liegen.

Der anfängliche Kanalabschnitt (43) hat im oberen Teil einen im wesentlichen U-förmigen Querschnitt mit im wesentlichen rechtwinkligen Dach- und Seitenwänden und einem in etwa konstanten Querschnitt, der dem Mündungsquerschnitt entspricht und bis ca. zur Mitte (4) reicht. Im unteren Teil hat der Kanalabschnitt (43) einen keilförmigen Querschnitt mit einer schrägen Wandung, die einerseits zur Innenwand abgewinkelt ist und sich andererseits schräg nach unten zur Auslassöffnung (19,20) erstreckt. Der obere Teil ist nach zwei Richtungen abgewinkelt. Er hat in der Stirnansicht von Figur 5 und 7 einen horizontalen oder leicht schräg abwärts gerichteten Verlauf und in der Draufsicht von Figur 6 einen schrägen Verlauf entlang der Innenwand (35).

Im unteren Teil geht der anfängliche Kanalabschnitt (43) bereits in den inneren Kanalabschnitt (44) über. Sein oberer Teil verzweigt sich etwa ab der Mitte (4) in den im wesentlichen horizontal anschließenden äußeren Kanalabschnitt (45) und den schräg abwärts gerichteten inneren Kanalabschnitt (44), wobei im Bereich der Abzweigung (42) der U-förmige Querschnitt erhalten bleibt.

Der innere Kanalabschnitt (44) hat ähnlich wie der Anfangsbereich (43) einen oberen im Querschnitt U-förmigen Teil und einen unteren keilförmigen Teil, der sich zum inneren Öffnungsabschnitt (48) hin verjüngt. Der obere Teil ist schräg abwärts gerichtet und verringert dabei seine Höhe.

Der äußere Kanalabschnitt (45) hat einen kastenförmigen bzw. rechteckigen Querschnitt, dessen Breite sich ab der Verzweigung (42) bis auf Achshöhe des anderen Gebläses (11,12) keilförmig mindert und dann in der anschließenden 90°-Biegung (46,47) gleich bleibt. Während dieses Verlaufs behält der Kanalabschnitt (45) seine Höhe oder vergrößert sie etwas. Figur 6 zeigt die Breitenänderung in der Draufsicht und Figur 5 sowie 7 die Höhenänderung in der Stirnansicht. Die Formgebung ist zur Minderung von Strömungsverlusten über den langen Kanalweg günstig und entsprechend ausgelegt.

Die Oberseite bzw. das obere Leitblech (32) der Düsenkästen (13,14) und der Kanalabschnitte (43,44,45) kann einen wannenförmigen Verlauf haben und sich von der Stelle oberhalb des Gebläses (11,12) und der Mündung des Spiralbereichs (15,16) aus mit einer leicht abwärts gerichteten Schräglage bis in die Nähe der Mitte (4) und bis zu einer Knickstelle (34) erstrecken und anschließend wieder aufwärts gerichtet sein. Die Knickstelle (34) kann in Strömungsrichtung vor der Abzweigung (42) liegen. Das obere Leitblech (32) kann sich alternativ im wesentlichen gerade erstrecken.

Die Kastenunterseite und das untere, ebenfalls an der Mündung des Spiralbereichs (15,16) anschließende Leitblech (33) sind stärker abwärts geneigt. Die Kanalabschnitte (43,44) erhalten eine abfallende und zugleich zum Öffnungsbereich (48) hin sich erweiternde Form. Das untere Leitblech (33) erstreckt sich ebenfalls bis etwa in Höhe der vorgenannten Knickstelle (34), ist ab dort stärker abwärts geneigt und geht dann in einen vertikalen Wandabschnitt über, der vor der Mitte (4) liegt und das rückwärtige Ende des Düsenschlitzes (19,20) markiert.

Wie Figur 2 in Verbindung mit Figur 6 verdeutlicht, haben in der Draufsicht die Düsengehäuse (13,14) vom randseitigen Gebläse (11,12) ausgehend über die Länge bis zum gegenüber liegenden, vorderen Ende (26,27) eine insgesamt abnehmende Kastenbreite und eine sich seitlich verjüngende, spitz zulaufende Form. Die oberen Leitbleche (32) behalten dabei zunächst ihre Ausgangsbreite und knicken am Beginn der schrägen Innenwand (35) sogar leicht nach außen ab. Die Außenkante der Leitbleche (32) verläuft danach parallel zur Längsachse (30) weiter bis zum vorderen Ende (26,27), wobei sich im Zusammenwirken mit der schrägen Mittelwand (35) die Verjüngung ergibt. Die Innenwand (35) verläuft dabei im Bereich des vorderen Endes (26,27) nach der Knickstelle im Düsenschlitz (19,20) ebenfalls parallel zur Längsachse (30). Die unteren Leitbleche (33) haben eine ähnliche Formgebung in ihrer Breitenform.

Zugleich haben die Düsenkästen (13,14) an ihren äußeren Seitenwänden (36) an mehreren Stellen und insbesondere im unteren Bereich nahe den Düsenschlitzen (19,20) seitliche Abkantungen (37), die eine Verjüngung und trichterförmige Verengung des Strömungskanals (17,18) und des inneren Kanalabschnitts (44) nach unten zu den inneren Öffnungsabschnitten (48) hin bewirken. Auch der äußere Kanalabschnitt (45) hat nach der Umlenkung (46,47) eine solche Abkantung (38) und eine anschließende trichterförmige Verengung, wobei seine Breite in Stirnansicht gleich bleiben oder zunehmen kann. Bis zu den Abkantungen (37,38) haben die Kanalabschnitte (43,44,45) die vorerwähnte Kastenform mit dem wesentlichen U-förmigen Querschnitt. An den Düsenschlitzen (19,20) kann an der Unterseite eine längs laufende Auffangrinne (39) für Tropfwasser vorhanden sein.

Figur 3 verdeutlicht auch die Luftströmungen (22,23,51) im vorderen Düsenkasten (14) bzw. dessen Abschnitten (43,44,45) des Strömungskanals (18). Der verborgene Verlauf des in der Ansicht hinten liegenden Düsenkastens (13) ist nicht dargestellt. Aus der Zeichnung ist auch ersichtlich, dass sich die Düsenkästen (13,14) und die Strömungskanäle (17,18) von der Ausblasstelle in Gebläsenähe in der Höhe zu den Düsenschlitzen (19,20) hin zunehmend vergrößern, wobei sie in der Weite abnehmen. Durch die Verkleinerung der Kasten- bzw. Kanalbreite entsteht ein Düseneffekt. Die Trockenluft wird an den oberen Leitblechen (32) mit ruhiger Strömung und hoher Geschwindigkeit entlang geführt und erreicht auch die relativ weit von den Gebläsen (11,12) entfernten vorderen Enden (26,27) mit hoher Strömungsgeschwindigkeit. An den Düsenschlitzen (19,20) entsteht eine über den Düsenquerschnitt weitgehend gleichmäßig austretende Trockenluftströmung.

Durch die schräge Ausrichtung des inneren Kanalabschnitts (44) kann der Mittelstrahl (54,55) der Trockenluft aus den inneren Öffnungsabschnitten (48) der Auslassöffnungen (19,20) ebenfalls mit schräger Richtung austreten, was durch die Pfeile (24,25) in Figur 1 und 3 verdeutlicht wird. Die Ausströmrichtungen (24,25) sind hierbei jeweils von der Mitte (4) weg nach außen und zu den zugehörigen vorderen Enden (26,27) gerichtet. Die schräge Strömungsrichtung treibt das Wasser von den oben liegenden Fahrzeugflächen, z.B. dem in Figur 1 dargestellten Fahrzeugdach, von der Mitte (4) und dem dortigen Überlappungsbereich (21) nach links und rechts weg zu den Außenseiten des Fahrzeugs (2). Die konzentrierte austretende Luftströmung im Überlappungsbereich (21) ist hierbei besonders günstig und sorgt für einen starken, nach links und rechts teilenden Treibeffekt für das Wasser auf der Fahrzeugoberfläche. Günstig ist hierbei auch der schräg zur Fahrtrichtung (5) gerichtete Verlauf der Kanalabschnitte (44) und der Mittelstrahlen (54,55). Das Wasser kann dadurch leichter und besser abfließen, wobei Flüssigkeitsrückstände weitestgehend vermieden werden. Ferner gibt es über die gesamte Länge der Luftauslassöffnung (28) keine Strömungsnester oder andere Fehlstellen im austretenden Trockenluftstrom.

Der aus den äußeren Öffnungsabschnitten (49) austretende Seitenstrahl (40,41) kann gerade oder schräg zu den Seitenflächen des Fahrzeugs (2) gerichtet werden und treibt das ablaufende Wasser weiter nach unten. Dies kann durch zusätzliche Seitendüsen verstärkt werden, was aber nicht unbedingt erforderlich ist.

Wie Figur 5 und 7 in der Stirnansicht verdeutlichen, kann die untere Kante (29) der Düsenkästen (13,14), die auch die Düsenschlitze (19,20) begrenzt, eine leichte pfeilförmige Abwinkelung des Kantenverlaufs von der erhabenen Mitte (4) bis zu den etwas niedriger liegenden Vorderenden (26,27) zeigen. Alternativ ist ein gerader durchgehender Kantenverlauf möglich.

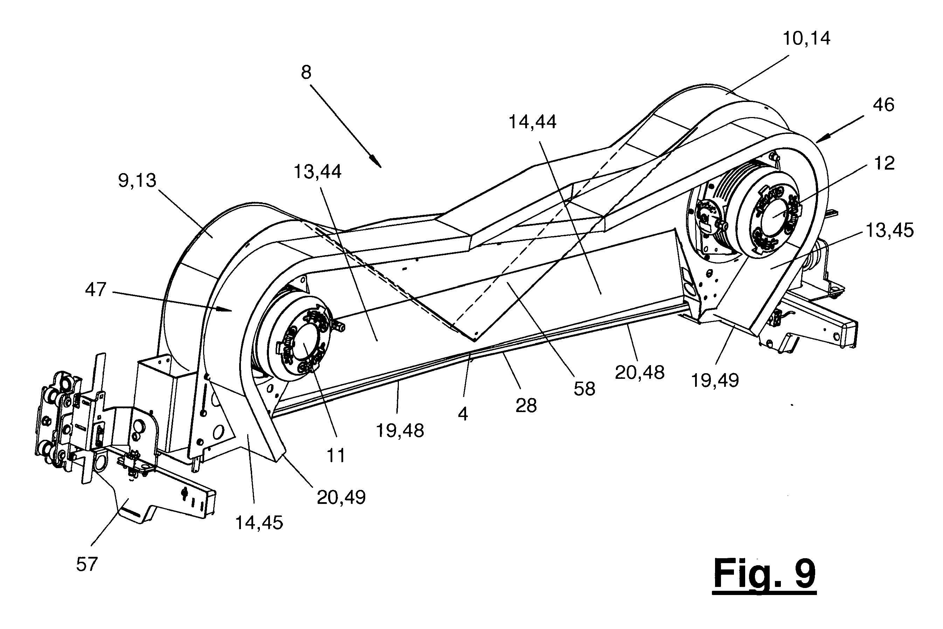

Figur 9 bis 13 zeigen eine Variante der Trockendüse (8). Diese weist wie im ersten Ausführungsbeispiel zwei Düseneinheiten (9,10) beziehungsweise zwei Düsenkästen (13,14) mit endseitig angebauten oder angeschlossenen Gebläsen (11,12) und einer Hauptausrichtung quer zur Fahrtrichtung (5) auf.

Im Unterschied zum ersten Ausführungsbeispiel ist von den Austrittsöffnungen (19,20) jeweils der innere Öffnungsabschnitt (48) auf der dem zugehörigen Gebläse (11,12) benachbarten Fahrzeugseite angeordnet und reicht bis zur Mitte (4) oder etwas darüber hinaus. Der andere äußere Öffnungsabschnitt (49) befindet sich am gegenüber liegenden Kastenende jenseits der Mitte (4). Dementsprechend sind die inneren und äußeren Kanalabschnitte (44,45) angeordnet und ausgerichtet.

In der zweiten Ausführungsform ist die Abzweigung (42) mit deutlichem Abstand vor der Mitte (4) angeordnet, wobei auch der gemeinsame Kanalabschnitt (43) entsprechend verkürzt ist. Die Abzweigung (42) befindet sich z.B. knapp hinter dem oberen Ende des Spiralbereichs (15,16) des Radialgebläses (11,12) oder an einer anderen Gebläseaustrittsstelle. Der abgezweigte äußere Kanalabschnitt (45) wird in einem Flachrohr über die Mitte hinweg in erhabener Stellung und mit einem im wesentlichen horizontalen Verlauf bis zum gegenüber liegenden Kastenende geführt und dort in einer Biegung (46,47) nach unten umgelenkt, wobei das Kanalende schräg nach innen bzw. zur Mitte (4) gerichtet sein kann. Der Öffnungsabschnitt (49) kann den gleichen Querschnitt wie die anderen Bereiche des Kanalabschnitts (45) haben.

In der zweiten Variante sind die Düsenkästen (13,14) in Fahrtrichtung (5) hintereinander angeordnet und schmiegen sich aneinander an. Bei dieser Ausführungsform kreuzen sich die Kanalabschnitt (45) der beiden Düsenkästen (13,14) im Bereich der Mitte (4) und sind dabei übereinander hinweg geführt. Am Ende umgreifen die Kanalabschnitte (45) mit ihrer jeweiligen Umlenkung (46,47) das Gebläse (11,12) bzw. dessen Motor (53) des jeweils anderen Düsenkastens (14,13).

Die inneren Kanalabschnitte (44) der beiden Düsenkästen (13,14) sind von der Abzweigung (42) aus jeweils schräg nach unten gerichtet und münden vor oder an der Mitte (4). Die zugehörigen Öffnungsabschnitte (48) können gemäß Figur 13 sich exakt in Kastenlängsrichtung (30) bzw. quer zur Fahrtrichtung (5) und in der Hauptebene des Portals (3) erstrecken. Die Öffnungsabschnitte (48) beider Düsenkästen (13,14) können außerdem miteinander fluchten. In Abweichung vom ersten Ausführungsbeispiel können die äußeren Öffnungsabschnitte (49) der Kanalabschnitte (45) quer zur besagten Längserstreckung (30) ausgerichtet sein und richten durch ihre rechteckigen Mündungen einen flachen Seitenstrahl (40,41) gegen die Seitenflächen des Fahrzeugs (2).

Die Düsenkästen (13,14) können auch in der zweiten Ausführungsform vollkommen voneinander baulich und strömungstechnisch getrennt sein. Alternativ können die inneren Kanalabschnitte (44) einen gemeinsamen Kastenbereich (58) haben, wobei lediglich im Bereich der Mitte (4) eine gegenseitige Abschottung der Kanalabschnitte (44) durch die schrägen strömungsleitenden Kanalwände (59) erfolgt. Die Kontaktstelle der schrägen Kanalwände (59) kann gegenüber der Düsenöffnung etwas zurück versetzt sein.

Die anderen schrägen und dem eigenen Gebläse (11,12) zugewandten Kanalwände (60) können derart weit nach außen zur Bildung eines trichterförmig sich erweiternden Kanalabschnitts (44) ausgestellt sein, dass sie knapp vor dem äußeren Öffnungsabschnitt (49) des jeweils anderen Düsenkastens (14,13) enden und auch bis unterhalb von dessen Gebläse (12,11) reichen.

Im zweiten Ausführungsbeispiel verdeutlichen außerdem die Zeichnungen, insbesondere Figur 9 und 13, die Anordnung von endseitigen Beschlägen (57) an der Trockendüse (8). An diesen Beschlägen (57) kann die im zweiten Ausführungsbeispiel nicht dargestellte Hubeinrichtung (31) bzw. die Führung angreifen. An den Beschlägen (47) können auch die Komponenten einer vorzugsweise berührungslosen Erfassungseinrichtung (56) angeordnet sein, die z.B. einen oder mehrere optische Sensoren, insbesondere in Form von Lichtschranken, Reflexlichttastern oder dergleichen, aufweist.

In den vorbeschriebenen Ausführungsformen ist die Trockendüse (8) mehrteilig ausgebildet und weist zwei oder mehr Düseneinheiten (9,10) nebst Düsenkästen (13,14) auf. Figur 14 verdeutlicht schematisch eine Variante mit einer einzelnen Düseneinheit (9) bzw. einem einzelnen Düsenkasten (13). Dieser ist z.B. entsprechend der Formgebung im zweiten Ausführungsbeispiel von Figur 9 bis 13 gestaltet, wobei der innere Kanalbereich (44) vor oder im Bereich der Mitte (4) endet. Alternativ ist auch eine Gestaltung nach dem ersten Ausführungsbeispiel mit einem jenseits der Mitte (4) angeordneten inneren Kanalabschnitt (44) möglich.

Eine solche einzelne Trockendüse (8) kann z.B. als Seitendüse benutzt werden, wobei der äußere Kanalabschnitt (45) je nach Drehlage einen eigenen Luftstrahl auf das Dach oder den Schwellerbereich eines Fahrzeugs (2) richtet. Die gezeigte Düseneinheit (9) kann auch als Dachdüse Verwendung finden, wobei mehrere eigenständige Düseneinheiten (9,10) mit Abstand hintereinander oder ggf. an eigenen Portalen oder Gestellen (3) angeordnet sind. Im Unterschied zu den beiden ersten Ausführungsbeispielen kann hierdurch ebenfalls eine mehrteilige Trockendüse (8) mit einer in Fahrtrichtung (5) gespreizten Bauweise gebildet werden.

Abwandlungen der gezeigten Ausführungsform sind in verschiedener Weise möglich. Zum einen kann die gezeigte Trockendüse (8) bei entsprechender Anpassung in der Formgebung auch als Seitendüse Verwendung finden. Ferner ist es möglich, nur eine oder mehr als zwei Düseneinheiten (9,10) vorzusehen. Zudem ist es möglich, den Überlappungsbereich (21) zu vergrößern. Variabel ist ferner die konstruktive Ausgestaltung der Düsenkästen (13,14) und der Gebläse (11,12). Diese können z.B. als Axialgebläse ausgebildet sein. Die Trockendüse (8) kann außerdem ohne die Formanpassungen und Anschmiegungen der Düsenkästen (13,14) auskommen und entsprechend breiter bauen, z.B. ähnlich wie in der DE 31 28 965 A.

Die Verzweigung von Strömungskanälen lässt sich auch bei Düsenkästen einsetzen, deren Strömungskanal zu einem inneren Öffnungsabschnitt geführt ist, der vor der Mitte (4) liegt. Der abgezweigte Kanalabschnitt (45) kann dabei über die Mitte (4) hinweg und um ein evtl. vorhandenes gegenüberliegendes Gebläse herumgeführt sein. Bei einer Mehrfachanordnung von Düsenkästen (13,14) müssen diese sich nicht unbedingt kreuzen und brauchen auch keine aneinander anschließenden Auslassöffnungen zu haben. Die Düsenkästen (13,14) können auch eigenständig hintereinander angeordnet sein und dabei getrennte und hintereinander in Fahrtrichtung (5) angeordnete Auslassöffnungen (19,20) aufweisen. Diese Auslassöffnungen können eine größere Überlappung (21) in der Mitte (4) haben und eine größere Länge als in den vorbeschriebenen Ausführungsbeispielen besitzen. Ferner können die beschriebenen und als Alternativen aufgezeigten Merkmale der verschiedenen Ausführungsformen beliebig miteinander kombiniert oder vertauscht werden.

### BEZUGSZEICHENLISTE

- 1: Behandlungseinrichtung, Autowaschanlage
- 2: Fahrzeug
- 3: Portal
- 4: Anlagenmitte, Mittellinie
- 5: Fahrtrichtung
- 6: Wascheinrichtung
- 7: Trockeneinrichtung
- 8: Trockendüse, Dachdüse
- 9: Düseneinheit
- 10: Düseneinheit
- 11: Gebläse
- 12: Gebläse
- 13: Düsenkasten 1. Einheit
- 14: Düsenkasten 2. Einheit
- 15: Spiralbereich 1. Einheit
- 16: Spiralbereich 2. Einheit
- 17: Strömungskanal 1. Einheit
- 18: Strömungskanal 2. Einheit
- 19: Auslassöffnung, Düsenschlitz 1. Einheit
- 20: Auslassöffnung, Düsenschlitz 2. Einheit
- 21: Überlappungsbereich
- 22: Luftströmung im anfänglichen Kanalabschnitt
- 23: Luftströmung im inneren Kanalabschnitt
- 24: Ausströmrichtung 1. Einheit
- 25: Ausströmrichtung 2. Einheit
- 26: vorderes Ende Düsenkasten 1. Einheit
- 27: vorderes Ende Düsenkasten 2. Einheit
- 28: Luftausströmöffnung
- 29: untere Gehäusekante
- 30: Längsachse Trockendüse, Längserstreckung
- 31: Hubeinrichtung
- 32: oberes Leitblech
- 33: unteres Leitblech
- 34: Knickstelle
- 35: Innenwand
- 36: Seitenwand, Außenwand
- 37: Abkantung an Seitenwand
- 38: Abkantung an Seitenwand
- 39: Auffangrinne
- 40: Luftstrahl, Seitenstrahl
- 41: Luftstrahl, Seitenstrahl
- 42: Verzweigung
- 43: Kanalabschnitt Anfangsbereich
- 44: Kanalabschnitt Innenbereich
- 45: Kanalabschnitt Außenbereich
- 46: Umlenkung, Biegung, Kanalabschnitt 1. Einheit
- 47: Umlenkung, Biegung, Kanalabschnitt 2. Einheit
- 48: Öffnungsabschnitt Innenbereich
- 49: Öffnungsabschnitt Außenbereich
- 50: Außenwand
- 51: Luftströmung im äußeren Kanalabschnitt
- 52: Ansaugöffnung
- 53: Motor
- 54: Luftstrahl, Mittelstrahl
- 55: Luftstrahl, Mittelstrahl
- 56: Erfassungseinrichtung, Sensorik
- 57: Beschlag
- 58: gemeinsamer Kastenbereich
- 59: Kanalwand
- 60: Kanalwand

## Patentansprüche

1. Trockeneinrichtung für Behandlungseinrichtungen (1) von Fahrzeugen (2), insbesondere Autowaschanlagen, mit einer Trockendüse (8), die mindestens einen Düsenkasten (13,14) mit einem internen Strömungskanal (17,18) und zwei oder mehr Gebläse (11,12) aufweist, **dadurch gekennzeichnet, dass** der mit dem einen Gebläse (11,12) verbundene Strömungskanal (17,18) eine Verzweigung (42) in mindestens zwei getrennte Kanalabschnitte (44,45) aufweist, wobei ein abgezweigter Kanalabschnitt (45) sich zu einem anderen Gebläse (12,11) hin erstreckt.

2. Trockeneinrichtung nach Anspruch 1, **dadurch gekennzeichnet, dass** die Gebläse (11,12) gegenüberliegend an den Seitenrandbereichen der Trockendüse (8) angeordnet sind.

3. Trockeneinrichtung nach Anspruch 1 oder 2, **dadurch gekennzeichnet, dass** die Trockendüse (8) als im wesentlichen horizontale Dachdüse ausgebildet ist und zwei oder mehr gegeneinander gerichtete Düsenkästen (13,14) mit einem endseitig am Düsenkasten (13,14) angeschlossenen Gebläse (11,12) aufweist, die einander kreuzend und mit gegenseitiger enger Anschmiegung in Fahrtrichtung (5) hintereinander angeordnet sind.

4. Trockeneinrichtung nach Anspruch 1, 2 oder 3, **dadurch gekennzeichnet, dass** die Trockendüse (8) höhenverstellbar angeordnet und mittels eine berührungslosen Erfassungseinrichtung (56) der Fahrzeugkontur nachführ bar ist.

5. Trockeneinrichtung nach einem der vorhergehenden Ansprüche, **dadurch gekennzeichnet, dass** die Kanalabschnitte (44,45) gegenseitig abgeschottet sind und distanziert verlaufen.

6. Trockeneinrichtung nach einem der vorhergehenden Ansprüche, **dadurch gekennzeichnet, dass** der eine Kanalabschnitt (45) um ein anderes Gebläse (12,11) herumgeführt ist.

7. Trockeneinrichtung nach einem der vorhergehenden Ansprüche, **dadurch gekennzeichnet, dass** der eine Kanalabschnitt (45) oberhalb eines anderen Gebläses (12,11) verläuft und dieses mit einer Umlenkung von ca. 90° oder mehr außenseitig umgibt.

8. Trockeneinrichtung nach einem der vorhergehenden Ansprüche, **dadurch gekennzeichnet, dass** die Auslassöffnung (19,20) des Düsenkastens (13,14) in mehrere voneinander getrennte Öffnungsabschnitte (48,49) unterteilt ist, die jeweils am Ende der Kanalabschnitte (44,45) angeordnet sind.

9. Trockeneinrichtung nach einem der vorhergehenden Ansprüche, **dadurch gekennzeichnet, dass** der äußere Öffnungsabschnitt (49) am Außenrand (26,27) der Trockendüse (8) angeordnet ist und einen Seitenstrahl (40,41) zur Seitenfläche eines Fahrzeugs (2) emittiert.

10. Trockeneinrichtung nach einem der vorhergehenden Ansprüche, **dadurch gekennzeichnet, dass** der Düsenkasten (13,14) einen vom eigenen angebauten Gebläse (11,12) aus über die Mitte (4) reichenden Strömungskanal (17,18) mit einer jenseits der Mitte (4) gelegenen Auslassöffnung (19,20) aufweist.

11. Trockeneinrichtung nach einem der Ansprüche 1 bis 9, **dadurch gekennzeichnet, dass** der Düsenkasten (13,14) einen vom eigenen angebauten Gebläse (11,12) ausgehenden Strömungskanal (17,18) aufweist, dessen abgezweigter Kanalabschnitt (45) sich über die Mitte (4) hinweg erstreckt und dessen anderer Kanalabschnitt (44) bis zum Bereich der Mitte (4) reicht.

12. Trockeneinrichtung nach einem der vorhergehenden Ansprüche, **dadurch gekennzeichnet, dass** die Düsenkasten (13,14) getrennte und einander kreuzende äußere Kanalabschnitte (45) und im Bereich der inneren Kanalabschnitte (44) einen gemeinsamen Kastenbereich (58) aufweisen.

13. Trockeneinrichtung nach einem der vorhergehenden Ansprüche, **dadurch gekennzeichnet, dass** die Gebläse (11,12) als Radialgebläse ausgebildet und umfangseitig an den Düsenkasten (13,14) angebaut sind, welcher am Gebläse (11,12) einen Spiralbereich (15,16) aufweist.

14. Verfahren zum Trocknen von Fahrzeugen (2) in einer Behandlungseinrichtung (1), insbesondere einer Autowaschanlage, mittels einer Trockeneinrichtung (7), die eine Trockendüse (8) mit mindestens einem Düsenkasten (13,14) mit einem internen Strömungskanal (17,18) und zwei oder mehr Gebläse (11,12) aufweist, **dadurch gekennzeichnet, dass** die Luft von einem Gebläse (11,12) in einen Strömungskanal (17,18) geblasen und dort an einer Verzweigung (42) in mindestens zwei getrennte Kanalabschnitte (44,45) verteilt wird, wobei die Luftströmung (51) in einem abgezweigten Kanalabschnitt (45) bis zu einer Austrittsstelle nahe an einem anderen Gebläse (12,11) hin geführt wird.

15. Behandlungseinrichtung (1) von Fahrzeugen (2), insbesondere Autowaschanlage, mit einer Trockeneinrichtung (7), die mindestens eine Trockendüse (8) und zwei oder mehr Gebläse (11,12) aufweist, **dadurch gekennzeichnet, dass** die Trockendüse (8) nach den Merkmalen von einem der Ansprüche 1 bis 13 ausgebildet ist.

## Claims

1. Drying device for treatment devices (1) of vehicles (2), in particular car wash systems, with a drying nozzle (8) which has at least one nozzle box (13, 14) having an internal flow duct (17, 18) and two or more blowers (11, 12), **characterized in that** the flow duct (17, 18) which is connected to the one blower (11, 12) has a branching (42) into at least two separate duct sections (44, 45), wherein one branched-off duct section (45) extends towards another blower (12, 11).

2. Drying device according to Claim 1, **characterized in that** the blowers (11, 12) are arranged opposite each other on the side edge regions of the drying nozzle (8).

3. Drying device according to Claim 1 or 2, **characterized in that** the drying nozzle (8) is designed as a substantially horizontal roof nozzle and has two or more nozzle boxes (13, 14) directed towards each other, with a blower (11, 12) connected to the nozzle box (13, 14) on the end side, said nozzle boxes intersecting each other and being arranged consecutively in the direction of travel (5) with a mutually tight fit.

4. Drying device according to Claim 1, 2, or 3, **characterized in that** the drying nozzle (8) is arranged in a height-adjustable manner and can be tracked by means of a contact-free detecting device (56) of the vehicle contour.

5. Drying device according to one of the preceding claims, **characterized in that** the duct sections (44, 45) are partitioned off from each other and run at a distance from each other.

6. Drying device according to one of the preceding claims, **characterized in that** the one duct section (45) is guided around another blower (12, 11).

7. Drying device according to one of the preceding claims, **characterized in that** the one duct section (45) runs above another blower (12, 11) and surrounds the latter on the outside with a deflection of approx. 90° or more.

8. Drying device according to one of the preceding claims, **characterized in that** the outlet opening (19, 20) in the nozzle box (13, 14) is divided into a plurality of opening sections (48, 49) which are separated from one another and are respectively arranged at the end of the duct sections (44, 45).

9. Drying device according to one of the preceding claims, **characterized in that** the outer opening section (49) is arranged on the outer edge (26, 27) of the drying nozzle (8) and emits a lateral jet (40, 41) with respect to the side surface of a vehicle (2).

10. Drying device according to one of the preceding claims, **characterized in that** the nozzle box (13, 14) has a flow duct (17, 18) which reaches from the dedicated blower (11, 12) mounted thereon over the centre (4) and has an outlet opening (19, 20) positioned on the far side of the centre (4).

11. Drying device according to one of Claims 1 to 9, **characterized in that** the nozzle box (13, 14) has a flow duct (17, 18) which starts from the dedicated fan (11, 12) mounted thereon and the branched-off duct section (45) of which extends beyond the centre (4) and the other duct section (44) of which reaches as far as the region of the centre (4).

12. Drying device according to one of the preceding claims, **characterized in that** the nozzle boxes (13, 14) have separate and mutually intersecting outer duct sections (45), and a common box region (58) in the region of the inner duct sections (44).

13. Drying device according to one of the preceding claims, **characterized in that** the blowers (11, 12) are designed as radial blowers and are mounted circumferentially on the nozzle box (13, 14) which has a spiral region (15, 16) on the blower (11, 12).

14. Method for drying vehicles (2) in a treatment device (1), in particular a car wash system, by means of a drying device (7) which has a drying nozzle (8) with at least one nozzle box (13, 14) with an internal flow duct (17, 18) and two or more blowers (11, 12), **characterized in that** the air from a blower (11, 12) is blown into a flow duct (17, 18) and is distributed there at a branching (42) into at least two separate duct sections (44, 45), wherein the air flow (51) is guided in a branched-off duct section (45) as far as an outlet point in the vicinity of another blower (12, 11).

15. Treatment device (1) of vehicles (2), in particular car wash system, with a drying device (7) which has at least one drying nozzle (8) and two or more blowers (11, 12), **characterized in that** the drying nozzle (8) is designed according to the features of one of Claims 1 to 13.

## Revendications

1. Dispositif de séchage pour des dispositifs de traitement (1) de véhicules (2), en particulier des installations de lavage de véhicules automobiles, avec une buse de séchage (8), qui présente au moins un caisson de buse (13, 14) avec un canal d'écoulement interne (17, 18) et deux soufflantes ou plus (11, 12), **caractérisé en ce que** le canal d'écoulement (17, 18) relié à une première soufflante (11, 12) présente une bifurcation (42) en au moins deux parties de canal séparées (44, 45), dans lequel une partie de canal dérivée (45) s'étend jusqu'à une autre soufflante (12, 11).

2. Dispositif de séchage selon la revendication 1, **caractérisé en ce que** les soufflantes (11, 12) sont disposées en position opposée sur des régions de bord latérales de la buse de séchage (8).

3. Dispositif de séchage selon la revendication 1 ou 2, **caractérisé en ce que** la buse de séchage (8) est réalisée sous la forme d'une buse de toit essentiellement horizontale et présente deux caissons de buse (13, 14), ou plus, orientés l'un contre l'autre avec une soufflante (11, 12) raccordée côté extrémité au caisson de buse (13, 14), qui sont disposés l'un derrière l'autre dans la direction de roulage (5) en se croisant mutuellement et avec une forme étroitement adaptée l'un contre l'autre.

4. Dispositif de séchage selon la revendication 1, 2 ou 3, **caractérisé en ce que** la buse de séchage (8) est réglable en hauteur et le contour du véhicule peut être détecté au moyen d'un dispositif de détection sans contact (56).

5. Dispositif de séchage selon l'une quelconque des revendications précédentes, **caractérisé en ce que** les parties de canal (44, 45) sont cloisonnées l'une par rapport à l'autre et sont espacées.

6. Dispositif de séchage selon l'une quelconque des revendications précédentes, **caractérisé en ce qu'**une première partie de canal (45) est conduite autour d'une autre soufflante (12, 11).

7. Dispositif de séchage selon l'une quelconque des revendications précédentes, **caractérisé en ce qu'**une première partie de canal (45) s'étend au-dessus d'une autre soufflante (12, 11) et entoure celle-ci du côté extérieur avec une déviation d'environ 90° ou plus.

8. Dispositif de séchage selon l'une quelconque des revendications précédentes, **caractérisé en ce que** l'ouverture de sortie (19, 20) du caisson de buse (13, 14) est divisée en plusieurs parties d'ouverture (48, 49) séparées les unes des autres, qui sont disposées respectivement à l'extrémité des parties de canal (44, 45).

9. Dispositif de séchage selon l'une quelconque des revendications précédentes, **caractérisé en ce que** la partie d'ouverture extérieure (49) est disposée au bord extérieur (26, 27) de la buse de séchage (8) et émet un jet latéral (40, 41) vers la face latérale d'un véhicule (2).

10. Dispositif de séchage selon l'une quelconque des revendications précédentes, **caractérisé en ce que** le caisson de buse (13, 14) présente un canal d'écoulement (17, 18) s'étendant depuis sa propre soufflante installée (11, 12) jusqu'au-delà du milieu (4) avec une ouverture de sortie (19, 20) située de l'autre côté du milieu (4).

11. Dispositif de séchage selon l'une quelconque des revendications 1 à 9, **caractérisé en ce que** le caisson de buse (13, 14) présente un canal d'écoulement (17, 18) partant de sa propre soufflante installée (11, 12), dont la partie de canal dérivée (45) s'étend jusqu'au-delà du milieu (4) et dont l'autre partie de canal (44) s'étend jusque dans la région du milieu (4).

12. Dispositif de séchage selon l'une quelconque des revendications précédentes, **caractérisé en ce que** les caissons de buse (13, 14) présentent des parties de canal extérieures (45) séparées et qui se croisent mutuellement et une région de caisson commune (58) dans la région des parties de canal intérieures (44).

13. Dispositif de séchage selon l'une quelconque des revendications précédentes, **caractérisé en ce que** les soufflantes (11, 12) sont des soufflantes radiales et sont montées en périphérie sur le caisson de buse (13, 14), qui présente à la soufflante (11, 12) une région en spirale (15, 16).

14. Procédé de séchage de véhicules (2) dans un dispositif de traitement (1), en particulier une installation de lavage de véhicules automobiles, au moyen d'un dispositif de séchage (7), qui présente une buse de séchage (8) avec au moins un caisson de buse (13, 14) avec un canal d'écoulement interne (17, 18) et deux soufflantes ou plus (11, 12), **caractérisé en ce que** l'on souffle l'air au moyen d'une soufflante (11, 12) dans un canal d'écoulement (17, 18) et on l'y répartit à une bifurcation (42) dans au moins deux parties de canal séparées (44, 45), dans lequel on conduit l'écoulement d'air (51) dans une partie de canal dérivée (45) jusqu'à un point de sortie proche d'une autre soufflante (12, 11).

15. Dispositif de traitement (1) de véhicules (2), en particulier installation de lavage de véhicules automobiles, avec un dispositif de séchage (7), qui présente au moins une buse de séchage (8) et deux soufflantes ou plus (11, 12), **caractérisé en ce que** la buse de séchage (8) est réalisée selon les caractéristiques de l'une quelconque des revendications 1 à 13.
